# EUROPEAN PATENT APPLICATION

(11) **EP 4 509 747 A1**
(43) Date of publication of application: **19.02.2025**
(21) Application number: 23788189.1
(22) Date of filing: 03.04.2023
(51) Int. Cl.: F16L 33/22, F16L 21/00, F16L 37/12

(54) **PIPE JOINT AND SLEEVE TO BE USED FOR PIPE JOINT**

(30) Priority: 15.04.2022 JP 2022067381
(71) Applicant: Toyox Co., Ltd., Kurobe-shi Toyama 938-8585 (JP)
(72) Inventor: SUGITA, Shuji, Kurobe-shi, Toyama 938-8585 (JP); SHIMIZU, Kazuki, Kurobe-shi, Toyama 938-8585 (JP)
(74) Representative: Perani & Partners S.p.A.
(86) International application number: PCT/JP2023/013768
(87) International publication number: WO 2023/199769

(57) **Abstract**

It is an object of the invention to provide a hose joint that enables retaining of a hose body in a manner in which the hose body cannot be pulled out with reliability only by inserting the hose body while smoothening inserting of the hose body, and at the same time, also enables pulling out of the hose body.

A hose joint, includes: a guide part provided at a nipple, and provided opposed to an inner surface of a hose body having flexibility; a tightening member having a tapered surface provided opposed to an outer peripheral surface of the guide part, so as to have g diameter increasing larger gradually in an inserting direction of the hose body; a sleeve provided reciprocatably in the inserting direction of the hose body and a hose pullout direction in an opposite direction thereto along the tightening member, and in a manner capable of undergoing diameter expansion and contraction deformation in a radial direction elastically; and an elastic member provided so as to press the sleeve in the hose pullout direction along the tapered surface, and is characterized in that the sleeve has an extending part to be more extended in the hose pullout direction in an opposite direction to the inserting direction of the hose body than the tightening member, and the extending part functions as a pressing part for performing a pressing operation of pressing the sleeve in the inserting direction of the hose body, and causing diameter expansion thereof when the hose body that has completely undergone inserting is pulled out.

## Description

### [Technical Field]

The present invention relates to a hose joint that can be connected easily only by inserting thereinto a hose body such as a deformable hose or tube formed of, for example, a material such as a synthetic resin or rubber and having flexibility, and that does not require a tool, and a sleeve for use in the hose joint.

### [Background Art]

This kind of hose joint can be conveniently connected only by inserting thereinto a hose body. However, inserting a hose body may not be able to be smoothly performed under a given resistance. For this reason, the resistance may cause some operators to stop the inserting operation of the pipe halfway, hence insufficient inserting of the hose body may cause the disconnection accident of the hose body or fluid leakage. Thus, in order to prevent such a situation, a structure has been suggested, which allows an operator himself / herself to feel the insufficient inserted state of the hose body (see, e.g., PTL 1).

### [Citation List]

### [Patent Literature]

[PTL 1] Japanese Patent Application Publication No. 2018-3980

### [Summary of Invention]

### [Technical Problem]

A hose joint of PTL 1 can be ascertained, with reliability, to have been inserted to a specified position no matter who performs the inserting operation of the hose body, not depending upon the experience of the operator, or the like, and can prevent insufficient inserting of the hose body with ease and reliability. For this reason, the hose joint has such a structure as to enable an operator or a field administrator to perform the piping operation of the hose body without worry.

The hose joint of PTL 1 allows the hose body to be inserted to a specified position with reliability. On the other hand, when the inserting operation has been once completed, the hose body cannot be pulled out unless the hose joint is broken or disassembled. At the setting site of the hose body, an emergency situation may occur in which the length of the hose body is revealed to be not long enough after setting, so that the hose body has to be replaced with a proper hose body. Even when such a situation does not occur, the sleeve serving as the pullout prevention member of the hose body is a consumable component that is deteriorated over time due to use, and that requires replacement. Regardless of this fact, despite the component being the portion requiring replacement, even a joint portion with a longer service life has to be destroyed, resulting in a higher cost. Even when the joint is a structure that can be disassembled, the operation load commensurate therewith is caused.

It is an object of the present invention to deal with such a problem. It is an object to provide a hose joint that enables retaining of a hose body in a manner in which the hose body cannot be pulled out with reliability only by inserting the hose body while smoothening inserting of the hose body, and at the same time, also enables pulling out of the hose body.

### [Solution to Problem]

The present invention relating to a hose joint for attaining such an object is characterized by including: a guide part provided at a nipple, and provided opposed to an inner surface of a hose body having flexibility; a tightening member having a tapered surface provided opposed to an outer peripheral surface of the guide part, so as to have diameter increasing larger gradually in an inserting direction of the hose body; a sleeve provided reciprocatably in the inserting direction of the hose body and a hose pullout direction in the opposite direction thereto along the tightening member, and in a manner capable of undergoing diameter expansion and contraction deformation in the radial direction elastically; and an elastic member provided so as to press the sleeve in the hose pullout direction along the tapered surface, and is characterized in that the sleeve has an extending part to be more extended in the hose pullout direction in the opposite direction to the inserting direction of the hose body than the tightening member, and the extending part functions as a pressing part for performing a pressing operation of pressing the sleeve in the inserting direction of the hose body, and causing diameter expansion thereof when the hose body that has completely undergone inserting is pulled out.

Further, the present invention relating to the sleeve for use in the hose joint is a sleeve for use as a pullout prevention member of the hose body at the hose joint, and is characterized in that the sleeve has an extending part to be more extended in the hose pullout direction than a nut in a connection completed state, and in that the extending part has a flange.

Similarly, the present invention relating to the sleeve for use in the hose joint is a sleeve for use as a pullout prevention member of the hose body in the hose joint, and is characterized in that the sleeve has a reversible structure capable of undergoing diameter expansion and contraction deformation elastically in a radial direction at both sides thereof in the inserting direction of the hose body and the hose pullout direction.

### [Brief Description of Drawings]

[Fig. 1]

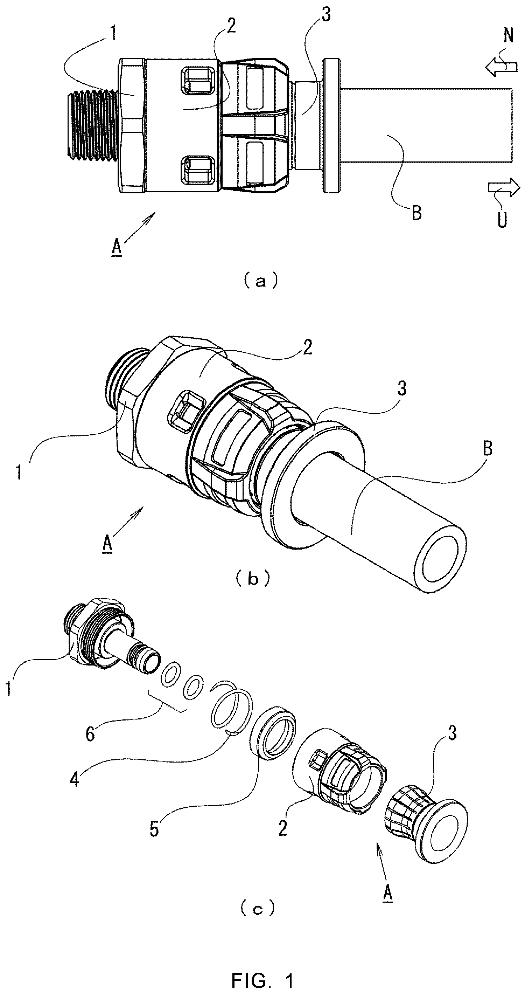

   Fig. 1 is view showing the overall configuration of a hose joint in accordance with an embodiment of the present invention, where Fig. 1(a) is a front view, Fig. 1(b) is a right perspective view, and Fig. 1(c) is a right perspective view at the time of disassembly.
[Fig. 2]

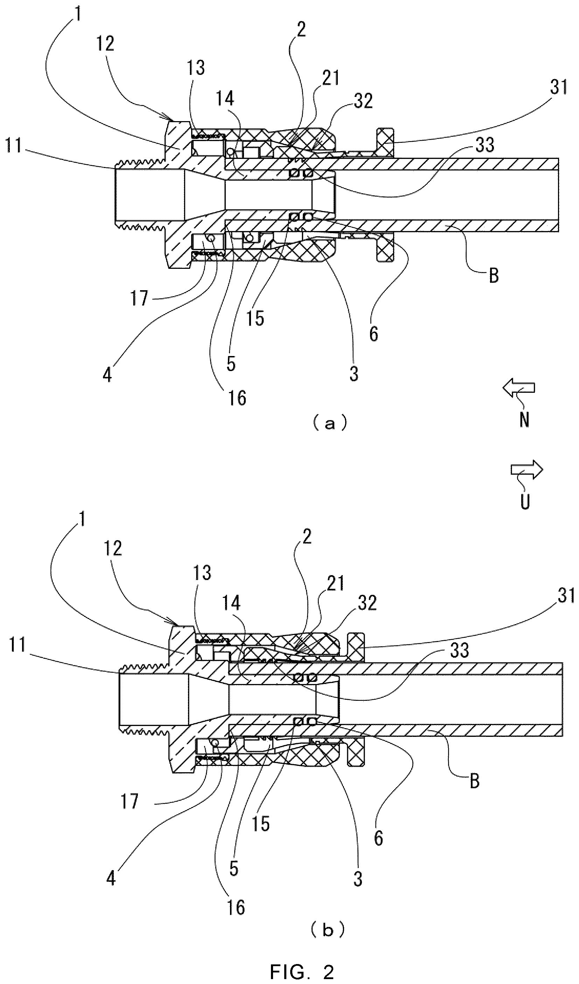

   Fig. 2 is a longitudinal cross-sectional front view showing the overall configuration of the hose joint in accordance with an embodiment of the present invention, where Fig. 2(a) shows a state upon completion of connection of the hose body, in which the sleeve undergoes diameter contraction, and Fig. 2(b) shows a state in which the sleeve undergoes diameter expansion by pushing.
[Fig. 3]

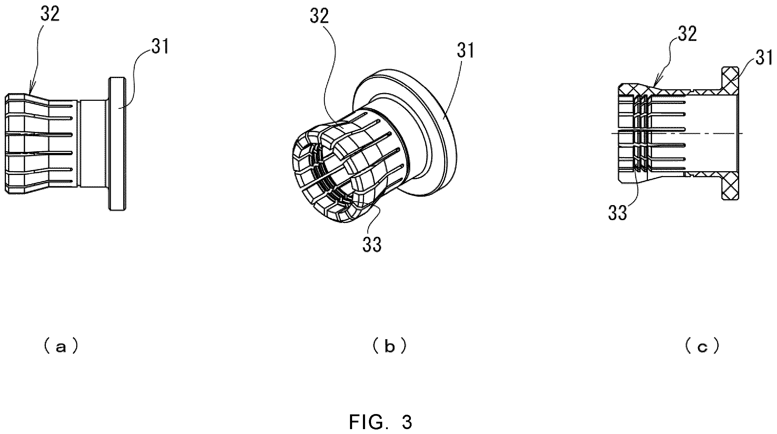

   Fig. 3 is a sleeve for use in the hose joint in accordance with an embodiment of the present invention, where Fig. 3(a) is a front view, Fig. 3(b) is a left perspective view, and Fig. 3(c) is a longitudinal cross-sectional front view.
[Fig. 4]

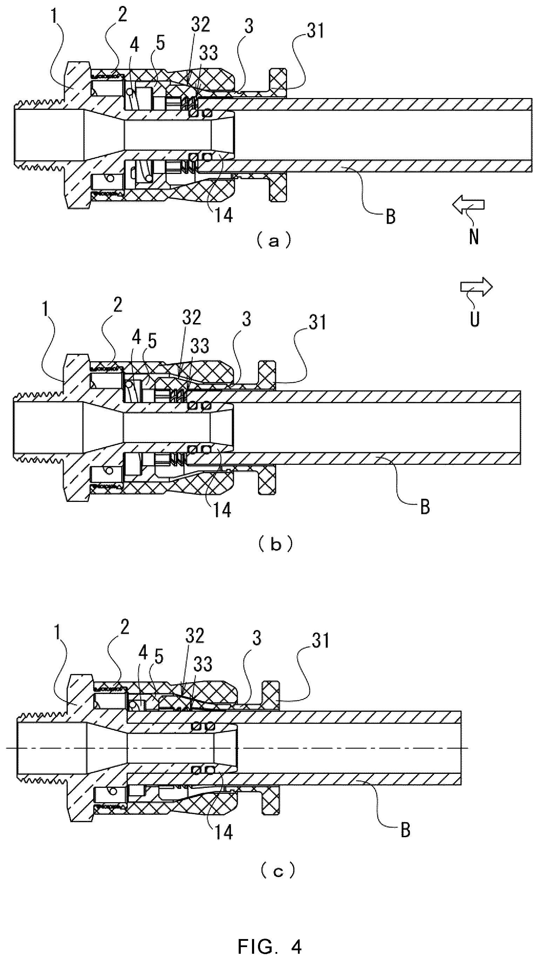

   Fig. 4 is a longitudinal cross-sectional front view showing the overall configuration of the hose joint in accordance with an embodiment of the present invention, where Fig. 4(a) shows the connection start time of the hose body, Fig. 4(b) shows the stage in the middle of the connection operation of the hose body, and Fig. 4(c) shows immediately before completion of connection by which the hose body is inserted to the hose butting part.
[Fig. 5]

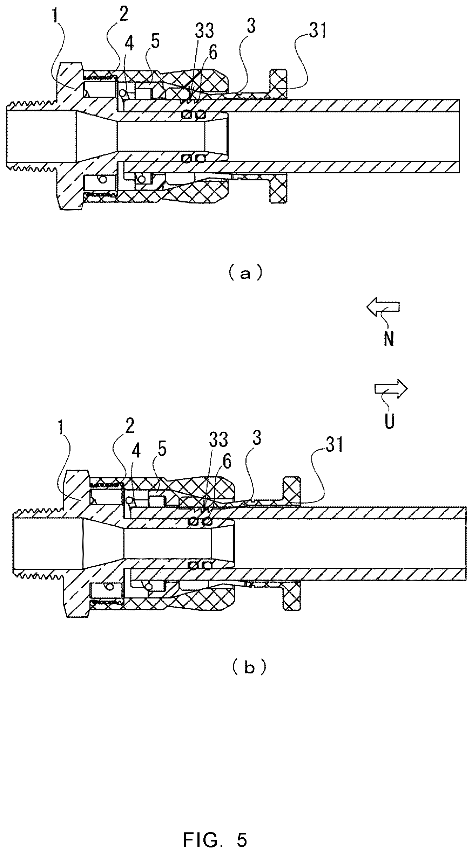

   Fig. 5 is a longitudinal cross-sectional front view showing the overall configuration of the hose joint in accordance with an embodiment of the present invention, where Fig. 5(a) shows the connection state and the pressurization time of the hose body, and Fig. 5(b) shows the stage upon continuation of or an increase in pressurization.
[Fig. 6]

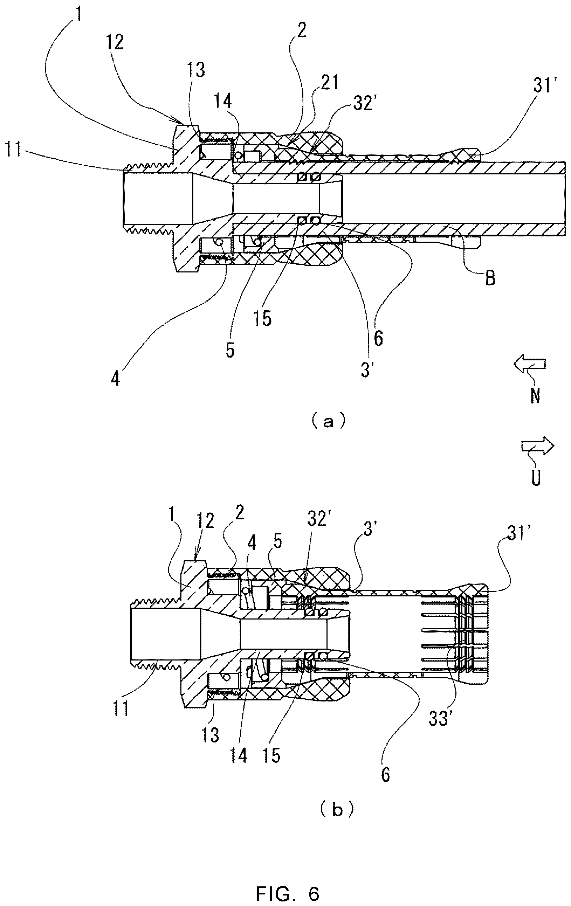

   Fig. 6 is a longitudinal cross-sectional front view showing the overall configuration of a hose joint in accordance with another embodiment of the present invention, where Fig. 6(a) shows a state upon completion of connection of the hose body, in which the sleeve has undergone diameter contraction, and Fig. 6(b) shows the state in which the hose body is not inserted.
[Fig. 7]

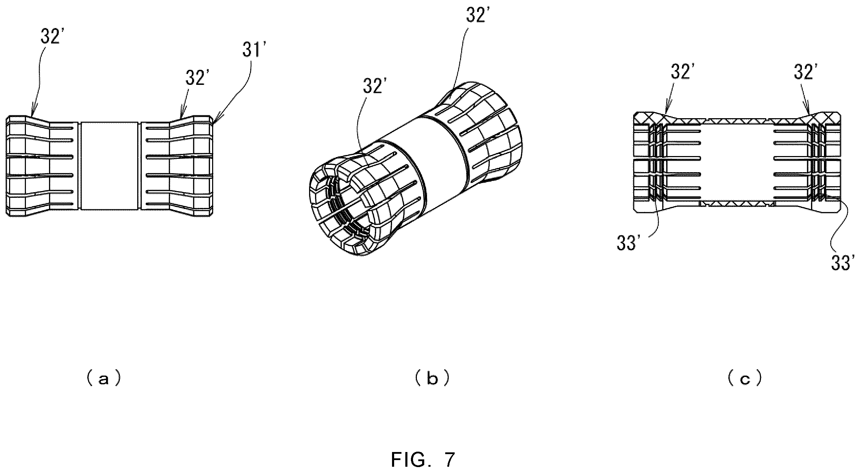

   Fig. 7 is a sleeve for use in a hose joint in accordance with a still other embodiment of the present invention, where Fig. 7(a) is a front view, Fig. 7(b) is a left perspective view, and Fig. 7(c) is a longitudinal cross-sectional front view.

### [Description of Embodiments]

### (Embodiments of the present invention)

Below, embodiments of the present invention will be described in details by reference to the drawings.

A hose joint A in accordance with an embodiment of the present invention includes, as main constituent elements, as shown in Figs. 1 to 3: a nipple 1 having a guide part 14 provided opposed to the inner surface of the hose body B; a nut 2 (tightening member) having a nut inner slope surface 21 (tapered surface) provided so as to be opposed to the outer peripheral surface of the guide part 14, and to be inclined in the axial direction thereof; a sleeve 3 provided reciprocatably in the inserting direction of the hose body and in the hose pullout direction of the opposite direction thereto along the nut inner slope surface 21 of the nut 2, and in a manner capable of undergoing diameter expansion and contraction deformation in the radial direction elastically; and a spring 4 provided so as to press the sleeve 3 in the hose pullout direction along the nut inner slope surface 21. Other than these, the hose joint A also includes a ring 5 serving as the spring holder of the spring 4, and an O-ring 6 for water shut-off.

Fig. 1 is a view showing the overall configuration of a hose joint in accordance with an embodiment of the present invention, where Fig. 1(a) is a front view, Fig. 1(b) is a right perspective view, and Fig. 1(c) is a right perspective view at the time of disassembly. Further, Fig. 2 is a longitudinal cross-sectional front view showing the overall configuration of the hose joint in accordance with an embodiment of the present invention, where Fig. 2(a) shows a state upon completion of connection of the hose body, in which the sleeve undergoes diameter contraction, and Fig. 2(b) shows a state in which the sleeve undergoes diameter expansion by pushing.

The nipple 1 is formed by subjecting a sheet material including a rigid material such as a metal including, for example, brass or a hard synthetic resin, or a deformable rigid material such as a stainless steel to press working or other mold working.

As shown in Figs. 1(b) and 1(c), it is configured such that the nut 2 is connected rotatively with respect to the nipple 1 by screwing between the female screw provided at the inner circumference of the nut 2 and the male screw provided at the outer circumference of the cylindrical part 13 of the nipple 1 with respect to the nipple 1 having the guide part 14 (see also Fig. 2(a)). The nipple 1 is provided with a tool engaging part 12 of a hexagonal two-across-flats part or the like to be used for screwing the nut 2. Before connecting the nut 2 to the nipple 1, an O-ring 6 is fitted and mounted into an annular concave part 15 formed at the guide part 14, and is held unmovably in the axial direction, and the spring 4 and the ring 5 are arranged between the nipple 1 and the nut 2. Then, the nut 2 is connected with the nipple 1. However, the sleeve 3 is not required to be assembled before connecting the nipple 1 and the nut 2. With a conventional hose joint, the sleeve is also demanded to be arranged therebetween for performing the connection operation before connection between the nipple and the nut. In other words, the sleeve cannot be attached later. However, in the present invention, even after connecting the nipple 1 and the nut 2, the sleeve 3 can be attached. Namely, as with the related art, it is possible to attach the sleeve at the time of assembly of the nipple 1 and the nut 2. On the other hand, even after assembly of the nipple 1 and the nut 2, the sleeve 3 undergoes diameter contraction only by pressing the sleeve 3 from the opening of the nut 2, so that it is possible to accommodate the sleeve 3 into the nut 2.

To the insertion space formed between the guide part 14 and the sleeve 3, the connection end part of the hose body B is inserted. As a result, the sleeve 3 once moves in the inserting direction N of the hose body B against the spring 4. However, thereafter, the sleeve 3 moves in the opposite direction in the hose pullout direction U of the opposite direction to the hose inserting direction N. Thus, the connection end part of the hose body B is interposed between the guide part 14 and the sleeve 3, and is connected and held as it is so that it cannot be pulled out. Fig. 2(a) shows that state. Then, Fig. 2(b) shows that the sleeve 3 can undergo diameter expansion with the hose body B connected by subjecting the pressing part 31 included in the sleeve 3 to the pressing operation, which is the maximum feature of the present invention. In this state, it is possible to pull out the hose body B with ease.

Incidentally, in the present embodiment, the pressing part 31 is formed as a flange shape. The following configuration is also acceptable: an engaging portion capable of engaging a jig for an exchange operation is provided; and for pressing, a jig for an exchange operation prepared as a separate body is engaged for pressing. It is important that the sleeve 3 is more extended in the hose pullout direction U opposite to the nipple 1 than the nut 2.

The guide part 14 is formed integrally with the nipple 1, and is formed in a cylindrical shape having an outer diameter substantially the same as, or a little smaller than the inner diameter of the hose body B, from, for example, a rigid material such as a metal including brass or the like or a hard synthetic resin, or is formed in a cylindrical shape having an outer diameter substantially the same as, or a little smaller than the inner diameter of the hose body B, and having a thin wall thickness by subjecting a sheet material including, for example, a deformable rigid material such as a stainless steel to press working or other mold workings. However, it is also possible to form the nipple 1 and the guide part 14 as separate bodies, and to assemble both, or, for example, to form the nipple 1 from brass and to form the guide part 14 from a resin, which makes the materials of both different.

At the outer peripheral surface of the guide part 14, an annular concave part 15 is formed that extends in the circumferential direction opposed to the inner surface of the hose body B and the inner peripheral surface of the sleeve 3, and the O-ring 6 is fitted and mounted into the annular concave part 15, and is held unmovably in the axial direction. In addition, the outer circumferential end of the O-ring 6 is protruded a little from the outer peripheral surface of the guide part 14, and is brought into pressure contact with the inner surface of the hose body B.

In the example shown, at the outer peripheral surface of the guide part 14, two annular concave parts 15 and two O-ring 6 are each spaced at predetermined intervals. The whole outer peripheral surface except for the annular concave parts 15 is formed in a smooth surface in the hose inserting direction N.

Further, although not shown as another example, only one set of O-ring 6 can be arranged in the annular concave part 15, or the O-ring 6 can be arranged at predetermined intervals in 3 or more sets of annular concave parts 15 in the axial direction of the guide part 14. Further, regardless of the arrangement position of the annular concave parts 15, the following configuration is also possible: the outer peripheral surface of the guide part 14 is not entirely configured as a smooth surface, but is configured in a shape of bamboo shoots in which a plurality of annular projections and a plurality of annular grooves are formed alternately in the hose inserting direction N.

A hose butting part 16 that is the step part, is formed on the far side in the hose inserting direction N of the guide part 14. This enables grasping of the completion of inserting when the hose body B is inserted. On the farther side in the hose inserting direction N than the hose butting part 16, a ring escaping part 17 (escaping part) as the space where the ring 5 can escape for pushing the sleeve 3 is formed.

The nut 2 is made of a transparent or colored resin or metal, and is formed in a substantially cylindrical shape with an axial portion having a larger inner diameter than the outer diameter of the sleeve 3, and is mounted unmovably in the axial direction with respect to the guide part 14 side by being screwed with the nipple 1.

At the inner peripheral surface of the nut 2, a nut inner slope surface 21 (tapered surface) inclined so as to gradually increase in diameter toward the hose inserting direction N, and so as to gradually decrease in diameter toward the hose pullout direction U is formed as a tightening means of the sleeve 3.

At the nut of a conventional hose joint, on the tip side in the hose pullout direction U at the inner peripheral surface thereof, a regulating portion opposed to the sleeve was formed in order to prevent the sleeve from moving in the hose pullout direction U. For this reason, it was not possible to mount the sleeve after connecting the nipple and the nut, and it was also not possible to remove the mounted sleeve without breaking or disassembling the hose joint. However, in the embodiment of the present invention, it is possible to mount and remove the sleeve 3. In view of the material and the structure of the sleeve 3 described later, it would be easily understood that in Fig. 2 (b) the sleeve 3 can be easily mounted and removed with no hose body B present.

Fig. 3 is a sleeve for use in the hose joint in accordance with an embodiment of the present invention, where Fig. 3(a) is a front view, Fig. 3(b) is a left perspective view, and Fig. 3(c) is a longitudinal cross-sectional front view.

The sleeve 3 is formed in a substantially cylindrical shape capable of undergoing diameter expansion and contraction deformation in the radial direction with, for example, an elastically deformable material such as a polyacetal resin or other synthetic resins excellent in surface slipperiness and toughness, and heat resistance, and the inner diameter is set so as to become substantially the same as, or larger than the outer diameter of the hose body B at the time of diameter expansion, and so as to become smaller than the outer diameter of the hose body B at the time of diameter contraction.

Further, the sleeve 3 is supported reciprocatably in the hose inserting direction N and the hose pullout direction U along the outer peripheral surface of the guide part 14 and the nut inner slope surface 21 of the nut 2.

At the inner peripheral surface of the sleeve 3, a sleeve projection 33 formed in a protruding manner toward the outer peripheral surface of the guide part 14 in an annular or nearly annular state in the circumferential direction is formed.

The sleeve projection 33 is arranged so as to be butted opposed in the hose inserting direction N against the front end surface at the connection end part of the hose body B at the time of inserting of the hose body B, and is formed so as to undergo diameter contraction deformation at the inner end thereof to be smaller than the outer diameter of the hose body B toward the outer surface of the connection end part with the movement in the hose pullout direction U.

As for the number of the sleeve projections 33, a plurality of sleeve projections 33 are preferably arranged in the hose inserting direction N. In the example shown in Fig. 2, at the inner peripheral surface of the sleeve 3, three sleeve projections 33 are integrally molded each at predetermined intervals. The 3 sleeve projections 33 are preferably set in such a positional relationship as to be arranged above the O-ring 6 on the far side in the hose inserting direction N in the connection completed state of the hose body B as shown in Fig. 2 (a).

Further, the sleeve 3 has: a sleeve slope surface 32 formed opposed to the nut inner slope surface 21 of the nut 2 at the outer peripheral surface thereof, and an elastic deformation portion for causing the sleeve projection 33 and the sleeve slope surface 32 to undergo elastic diameter expansion and contraction deformation in the radial direction of the sleeve 3.

The sleeve slope surface 32 is formed so as to become substantially parallel with the nut inner slope surface 21 of the nut 2 in an annular or nearly annular state in the circumferential direction along the outer peripheral surface of the sleeve 3, and has the following positional relationship: in the non-contact state with the nut inner slope surface 21, the dimensions are set so that the largest diameter part of the sleeve slope surface 32 may become equal or a little smaller in diameter to or than the largest diameter part of the nut inner slope surface 21; whereas, in the contact state, the part at which the nut inner slope surface 21 is small in diameter forces the sleeve slope surface 32 to undergo diameter contraction. Namely, it is configured such that the sleeve slope surface 32 is constantly in elastic pressure contact with the nut inner slope surface 21.

To elaborate, the sleeve slope surface 32 is arranged so as to once move in the hose inserting direction N along the nut inner slope surface 21 in accordance with butting between the sleeve projection 33 and the front end surface of the hose body B, and then move in the opposite direction in the hose pullout direction U by the spring 4.

The elastically deformation portion is configured to include a slot, a dent, or the like cut out in an axial direction part of the sleeve 3, and to tend to be elastically deformed in the radial direction. It is configured as follows: the sleeve slope surface 32 moves toward the hose inserting direction N while coming in contact with the nut inner slope surface 21, thereby causing the sleeve slope surface 32 to undergo smooth diameter expansion deformation; in addition, the sleeve slope surface 32 moves in the hose pullout direction U while coming in contact with the nut inner slope surface 21, thereby causing the sleeve slope surface 32 to undergo smooth diameter contraction deformation.

In the example shown, the sleeve slope surface 32 is formed in a swelling manner from an axial part of the sleeve 3, particularly, the intermediate position in the axial direction to the end part on the far side in the hose inserting direction N. In addition, a plurality of slots (slits) extending longer linearly in the axial direction than the sleeve slope surface 32 are cut out and arranged in the circumferential direction.

Then, the 3 sleeve projections 33 are in a shape protruding in the vertical direction shown on the far side in the hose inserting direction N. In contrast, the 3 sleeve projections 33 are in a shape of a 45-degree tapered surface on the rear side in the hose inserting direction N.

As a result, the configuration is formed as follows. At the time of start of inserting of the hose body B, the outer peripheral edge of the front end surface of the hose body B comes in contact with the 45-degree tapered surface of the sleeve projection 33, so that the sleeve 3 is pushed in the hose inserting direction N. However, the contact between the sleeve slope surface 32 and the nut inner slope surface 21 is released, so that the outer peripheral edge of the front end surface of the hose body B passes while pushing up the sleeve projection 33 with the diameter expansion deformation of the sleeve projection 33, and the hose body B is pushed to a prescribed position. Then, the sleeve 3 moves reversely in the hose pullout direction U by the spring 4. As a result, the inner end thereof bites into the outer surface of the hose body B with reliability in accordance with the diameter contraction deformation of the sleeve projection 33.

The spring 4 is an elastic body formed elastically deformably at least in one direction of, for example, a coil spring or a spring, and is arranged elastically deformably in the hose inserting direction N and the hose pullout direction U, thereby constantly pressing the sleeve 3 elastically in the hose pullout direction U.

In the example shown, a coil spring is interposed as a spring 4 between the spring butting part on the far side in the hose inserting direction N of the space formed by the cylindrical part 13 and the guide part 14 of the nipple 1 and a ring 5 that is the spring holder arranged on the rear side in the hose inserting direction N at the sleeve 3. As a result, the pressing force of the coil spring acts on the sleeve 3 uniformly in the circumferential direction. The ring 5 functions as a spring holder, and has a given thickness in the hose inserting direction, and abuts the inner face of the nut 2 without a gap, and hence reciprocates in perfect parallel with the nipple 1. For this reason, the sleeve 3 also reciprocates in perfect parallel with the nipple 1. Accordingly, the sleeve 3 will not be tilted.

On the other hand, the hose body B is formed of material having flexibility including, for example, a synthetic resin such as vinyl chloride, silicone rubber, or other rubber, and is, for example, a hose or a tube formed of a soft material, and preferably has flat inner surface and outer surface.

As the specific example of the hose body B, in the example shown, a hose of a monolayered structure is used. Alternatively, although not shown as another example, it is also possible to use a laminated hose (braid hose) including a plurality of, or single braid made of a synthetic resin (reinforced thread) embedded spirally as the intermediate layer between the transparent or opaque outer layer and the inner layer, a spiral reinforced hose including a band-shaped reinforcing material with a rectangular cross section made of a synthetic resin or a metal or the like and a linear reinforcing material with a circular cross section or the like, are wound spirally and integrated as the intermediate layer, or a spiral reinforced hose including a wire made of a metal or a wire made of a hard synthetic resin embedded spirally, or the like.

Further, the nipple 1 is provided with a connection part 11 to which another instrument (not shown), another hose body (not shown), or the like is connected. As a result, another instrument, another hose body, or the like to be connected therewith via the nipple 1 and the hose body B to be connected with the outer peripheral surface of the guide part 14 are coupled with each other. Incidentally, by providing the guide parts 14 in place of the connection part 11 at both ends, it is also possible to allow functioning as an intermediate joint.

### (Connection step of hose body)

A connection step of the hose joint A in accordance with an embodiment of the present invention will be described. Fig. 4 is a longitudinal cross-sectional front view showing the overall configuration of a hose joint in accordance with an embodiment of the present invention, where Fig. 4(a) shows the connection start time of the hose body, Fig. 4(b) shows the stage in the middle of the connection operation of the hose body, and Fig. 4(c) shows immediately before completion of connection of the hose body pushed to the hose butting part.

As shown in Fig. 4(a), the connection end part of the hose body B is inserted toward the insertion space formed between the guide part 14 and the sleeve 3. As a result, first, the front end surface of the hose body B is butted against the 45-degree tapered surface of the sleeve projection 33 at the sleeve 3. While keeping the butted state, the hose body B is pushed thereinto, so that the sleeve slope surface 32 of the sleeve 3 slides along the nut inner slope surface 21 of the nut 2. The whole sleeve 3 including the sleeve projection 33 moves in the hose inserting direction N against the pressing force of the spring 4. At this step, when an operator feels that the operation is difficult to do, the operator may assist in pushing in of the sleeve 3 using the pressing part 31 of the sleeve 3. Particularly, when an operator feels a strong resistance, it is better for the operator to push the sleeve 3 by hands. The reason for this is as follows. When the hose body B is inserted with the sleeve projection 33 being above the O-ring 6, the 45-degree tapered surface of the sleeve projection 33 causes the hose body B to crawl into the inner side of the sleeve projection 33. At this moment, the end part of the hose body B and the O-ring 6 come in strong contact with each other, so that the O-ring 6 curls up, which causes fluid leakage.

Because of this situation, in an embodiment of the present invention, the tapered surface of the sleeve projection 33 is set at 45 degrees. When the taper angle of the sleeve projection 33 becomes larger than 45 degrees, the contact between the end part of the hose body B and the tapered surface of the sleeve projection 33 becomes intense, and the hose body B is less likely to crawl into the inner side of the sleeve projection 33, and the sleeve 3 does not undergo diameter expansion. For this reason, it becomes difficult to insert the hose body B. When the taper angle of the sleeve projection 33 becomes smaller than 45 degrees, the contact area of the end part of the hose body B with the tapered surface of the sleeve projection 33 increases. As a result, the force pushing against the inner side of the sleeve projection 33 becomes strong. For this reason, the end part of the hose body B comes in strong contact with the O-ring 6, so that the O-ring 6 becomes more likely to be turned up. The 45-degree tapered surface of the sleeve projection 33 is set as the angle well balanced for causing the sleeve 3 to be expanded in diameter in the radial direction by crawling of the end part of the hose body B into the inner side of the sleeve projection 33 using pushing in of the sleeve 3 by the hose body B, and the tapered surface of the sleeve projection 33. However, depending upon the material of the hose body B or the strength of the O-ring 6, even when the taper angle is varied, this procedure is not impossible to implement. An angle of 45 degrees is only the setting for the present embodiment.

When the hose body B is inserted without turning up the O-ring 6, as shown in Fig. 4(b), the sleeve slope surface 32 of the sleeve 3 is pushed and moved in the hose inserting direction N along the nut inner slope surface 21. Accordingly, the elasticity possessed by itself causes the sleeve 3 to undergo diameter expansion, so that the sleeve slope surface 32 and the sleeve projection 33 also gradually undergo diameter expansion deformation. Subsequently, when with the diameter expansion deformation of the sleeve projection 33, the tip inner diameter thereof becomes larger than the tip outer diameter of the hose body B, the front end surface of the hose body B comes out of the 45-degree tapered surface of the sleeve projection 33. Then, since the sleeve 3 is pushed back in the opposite direction to the inserting direction N of the hose body B by the spring elasticity of the spring 4, the end part of the hose body B slides on the 45-degree tapered surface of the sleeve projection 33. Thus the hose body B passes through the inner side of the projection of the sleeve 3, and as shown in Fig. 4(c), the hose body B is inserted until it reaches the hose butting part 16 of the nipple 1.

On the other hand, when the frictional force in the hose inserting direction N is released upon completion of inserting of the hose body B, the sleeve 3 is pressed energetically in the hose pullout direction U by the elasticity of the spring 4. Accordingly, the sleeve 3 undergoes diameter contraction deformation at once, so that the inner end of the sleeve projection 33 is caused to bite into the outer surface of the hose body B. Thus, the hose body B is interposed unmovably in the hose pullout direction U between the outer peripheral surface of the guide part 14 and the sleeve 3 (see Fig. 2(a)).

Thus, only the operation of inserting the hose body B can complete the connection without requiring a tool, and with a single touch and smoothly, and in a manner in which pullout is impossible with reliability.

### (Hose body removing step)

Then, a description will be given to the removing step of the hose joint A in accordance with an embodiment of the present invention. For a conventional hose joint, the sleeve is completely accommodated in the nut. For this reason, this cannot be pushed in the hose inserting direction N. However, with the hose joint A in accordance with an embodiment of the present invention, the sleeve 3 has an extending part to be more extended than the nut 2 in the hose pullout direction U opposite to the nipple 1, and the extending part has a flange, which functions as the pressing part 31. For this reason, even with the connection of the hose body B completed, the sleeve 3 can be pushed in the hose inserting direction N. Fig. 2(b) shows a state in which the sleeve 3 has been pushed in. The ring 5 is set so as to enter a ring escaping part 17 of the nipple 1. For this reason, the sleeve 3 can be pushed into the farther side in the hose inserting direction N. The sleeve 3 undergoes diameter expansion, and the sleeve projection 33 does not bite into the hose body B. When the hose body B is pulled while continuing pushing in of the sleeve 3, the resistance due to the sleeve projection 33 will not be applied so much. For this reason, it is possible to pull out the hose body B with ease.

### (Regarding water shut-off structure)

A description will be given to the water shut-off structure of the hose joint A in accordance with an embodiment of the present invention. Fig. 5 is a longitudinal cross-sectional front view showing the overall configuration of the hose joint in accordance with an embodiment of the present invention, where Fig. 5(a) shows the connection state and the pressurizing time of the hose body, and Fig. 5(b) shows the stage upon continuation of or an increase in pressurization.

With the hose joint A in accordance with an embodiment of the present invention, the water shut-off structure is also improved. For the hose joint shown in PTL 1, a state occurs where the sleeve moves while tilting, so that the hose body and the O-ring may not be able to be properly compressed, which may result in insufficient water shut-off. With the hose joint A in accordance with an embodiment of the present invention, such a state is prevented from occurring. A description will be given by reference to Fig. 5.

After inserting the hose body B, as shown in Fig. 5(a), the sleeve projection 33 is arranged above the O-ring 6 situated on the far side in the hose inserting direction N. At this step, the sleeve 3 undergoes diameter contraction. For this reason, the sleeve projection 33 bites into the hose body B, and performs retaining of the hose body B, and at the same time, the hose body B and the O-ring 6 are compressed, thereby performing water shut-off. Guiding is performed by the outer peripheral surface of the ring 5 with respect to the inner face of the nut 2 so that movement in the axial direction may be enabled while suppressing the phenomenon in which the sleeve 3 tilts inside the nut 2 when the spring 4 pushes the sleeve 3. Namely, the movement is stabilized using the parallel surfaces of the inner face of the nut 2 and the outer peripheral surface of the ring 5. By setting such a positional relationship that when the sleeve projection 33 is arranged above the O-ring 6 situated on the far side in the hose inserting direction N, the O-ring 6 is present between the sleeve projection 33 and the sleeve projection 33, it is possible to compress the hose body B and the O-ring 6 and to perform water shut-off even in case of occurrence of tilting of the sleeve 3, or the like. In the case of the positional relationship in which the O-ring 6 is not present between the sleeve projection 33 and the sleeve projection 33, the hose body B and the O-ring 6 may not be able to be properly compressed when the sleeve 3 tilts, resulting in insufficient water shut-off, which causes fluid leakage. When a pressure is applied to the inside of the hose body B, a force to pull out the hose body B from the joint is applied, so that the hose body B and the sleeve 3 move in the hose pullout direction U at the same time by a combination with the spring force of the spring 4. Since the sleeve projection 33 bites into the hose body B, the hose body B and the sleeve 3 moves integrally. At this step, the contact between the nut inner slope surface 21 and the sleeve slope surface 32 causes the sleeve 3 to further undergo diameter contraction, so that the sleeve projection 33 more strongly bites the hose body B. As a result, retaining of the hose body B is performed with reliability, and at the same time, the compressive force of the hose body B and the O-ring 6 is increased, thereby performing water shut-off. Although under a relatively lower pressure, water shut-off is performed at the O-ring 6 on the far side in the hose inserting direction N (see Fig. 5(a)), with an increase in pressure, the hose body B moves, and the sleeve 3 undergoes diameter contraction, and at the same time, water shut-off is performed using the O-ring 6 on the rear side in the hose inserting direction N (see Fig. 5(b)). It is also possible to increase the number of the sleeve projections 33, the number of the O-ring 6, and the area of the elastic body of the O-ring 6. However, when the hose body B is applied with a pressure, the hose body B is required to move over the O-ring 6. Under such circumstances, when the frictional resistance between the hose body B and the O-ring 6, and the frictional resistance between the sleeve slope surface 32 and the nut inner slope surface 21 increase, the hose body B does not move smoothly, and the sleeve 3 also does not undergo diameter contraction. For this reason, water shut-off becomes less likely to be performed. It is necessary to set the number and the area of the O-ring 6 in consideration of the foregoing.

### (Other embodiments)

Fig. 6 is a longitudinal cross-sectional front view showing the overall configuration of a hose joint in accordance with another embodiment of the present invention, where: Fig. 6(a) shows a state upon completion of connection of a hose body, in which a sleeve has undergone diameter contraction, and Fig. 6(b) shows a state in which the hose body has not been inserted. Further, Fig. 7 is a sleeve for use in a hose joint in accordance with another embodiment of the present invention, where: Fig. 7(a) is a front view, Fig. 7(b) is a left perspective view, and Fig. 7(c) is a longitudinal cross-sectional front view.

The configurations of the nipple 1 and the nut 2, and constituent elements thereof, and the spring 4, the ring 5, and the O-ring 6 are precisely the same as those of the first embodiment, and only the configuration of a sleeve 3' is different from that of the first embodiment. Namely, the sleeve 3' is cylindrical at the intermediate portion, and is provided, at each end thereof, with an elastic deformation portion to undergo diameter expansion and contraction deformation elastically in the radial direction. However, the sleeve 3' is common to the sleeve 3 in that it is more extended in the hose pullout direction U opposite to the nipple 1 than the nut 2. The extended portion undergoes diameter expansion in a normal state. For this reason, this portion can be used as a pressing part 31'.

Then, such a sleeve 3' can be assembled from any side of the nut 2, and hence can improve the productivity.

Further, the sleeve exchangeability can also be improved. As described previously, the sleeve is a consumable component that is deteriorated over time with use, and requires replacement. When replacement is required, the sleeve 3' is once removed, is turned backward, and then, is inserted into the nut 2 again. As a result, the same effect as that of replacement can be obtained. The reversible structure has such an advantageous aspect.

Up to this point, the hose joint in accordance with each embodiment of the present invention has been described in details by reference to the accompanying drawings, and the structure thereof has been described. However, the specific configuration is not limited to the embodiments. It is understood that even changes in design within the scope not departing from the gist of the present invention, and the like are included in the present invention. For example, the tightening member was formed by the nut to be mounted to the nipple by screwing. However, the following change or the like can be made: the tightening member is detachably coupled, or is integrally fixed by welding or the like without screwing. In the present invention, with the hose joint assembled, the sleeve can be inserted and removed. For this reason, there is no inconvenience even if the nipple and tightening member are welded together.

### [Reference Signs List]

- 1: Nipple
- 11: Connection part
- 12: Tool engaging part
- 13: Cylindrical part
- 14: Guide part
- 15: Annular concave part
- 16: Hose butting part
- 17: Ring escaping part (escaping part)
- 2: Nut (tightening member)
- 21: Nut inner slope surface (tapered surface)
- 3: Sleeve
- 31: Pressing part
- 32: Sleeve slope surface
- 33: Sleeve projection
- 4: Spring
- 5: Ring
- 6: O-ring
- 3': Sleeve
- 31': Pressing part
- 32': Sleeve slope surface
- 33': Sleeve projection
- N: Inserting direction of the hose body (hose inserting direction)
- U: Opposite direction to inserting direction of the hose body (hose pullout direction)

## Claims

1. A hose joint, comprising:
a guide part provided at a nipple, and provided opposed to an inner surface of a hose body having flexibility;
a tightening member having a tapered surface provided opposed to an outer peripheral surface of the guide part, so as to have diameter increasing larger gradually in an inserting direction of the hose body;
a sleeve provided reciprocatably in the inserting direction of the hose body and a hose pullout direction in an opposite direction thereto along the tightening member, and in a manner capable of undergoing diameter expansion and contraction deformation in a radial direction elastically; and
an elastic member provided so as to press the sleeve in the hose pullout direction along the tapered surface, wherein
the sleeve has an extending part to be more extended in the hose pullout direction in an opposite direction to the inserting direction of the hose body than the tightening member, and
the extending part functions as a pressing part for performing a pressing operation of pressing the sleeve in the inserting direction of the hose body, and causing diameter expansion thereof when the hose body that has completely undergone inserting is pulled out.

2. The hose joint according to claim 1, wherein the extending part has a flange, and the flange functions as a pressing part.

3. The hose joint according to claim 1, wherein the sleeve has a reversible structure in which both sides thereof in the inserting direction of the hose body and the hose pullout direction can undergo diameter expansion and contraction deformation in a radial direction elastically, and a deformable portion on a side thereof not to be covered with the tightening member functions as a pressing part.

4. The hose joint according to claim 1, wherein the sleeve can be assembled from any side of the inserting direction of the hose body and the hose pullout direction opposed thereto of the tightening member.

5. The hose joint according to claim 2, 3, or 4, wherein the nipple has an escaping part for allowing a receiving portion of the elastic member to escape while accommodating in the inserting direction the receiving part of the hose body when the pressing operation has been performed.

6. A sleeve for use as a pullout prevention member of a hose body in a hose joint,
the sleeve comprising an extending part to be more extended in a hose pullout direction than a tightening member in a connection completed state, wherein
the extending part has a flange.

7. A sleeve for use as a pullout prevention member of a hose body in a hose joint, wherein
the sleeve has a reversible structure in which both sides thereof in an inserting direction of the hose body and a hose pullout direction can undergo diameter expansion and contraction deformation in a radial direction elastically.
